(19) Europäisches Patentamt
European Patent Office
Office européen des brevets

(11) EP 0 683 193 B1

(12) EUROPÄISCHE PATENTSCHRIFT

(45) Veröffentlichungstag und Bekanntmachung des Hinweises auf die Patenterteilung:
**15.09.1999 Patentblatt 1999/37**

(51) Int Cl.⁶: **C08G 64/14**, C08G 63/64

(21) Anmeldenummer: **95107028.3**

(22) Anmeldetag: **09.05.1995**

# (54) Verwendung von tertiären, aliphatischen Monocarbonsäuren als Kettenabbrecher für die Herstellung von Polycarbonaten und von Polyestercarbonaten

Use of tertiary aliphatic monocarboxylic acids as chain terminators for the preparation of polycarbonates and polyestercarbonates

Utilisation d'acides monocarboxyliques aliphatiques tertiaires comme agents de terminaison de chaîne pour la préparation de polycarbonates et de polyestercarbonates

(84) Benannte Vertragsstaaten:
**BE DE FR GB IT NL**

(30) Priorität: **20.05.1994 DE 4417751**

(43) Veröffentlichungstag der Anmeldung:
**22.11.1995 Patentblatt 1995/47**

(73) Patentinhaber: **BAYER AG**
**51368 Leverkusen (DE)**

(72) Erfinder:
- **Köhler, Burkhard, Dr.**
  **D-47829 Krefeld (DE)**
- **Ebert, Wolfgang, Dr.**
  **D-47800 Krefeld (DE)**
- **Horn, Klaus, Dr.**
  **D-41539 Dormagen (DE)**
- **Schäfer, Walter, Dr.**
  **D-42799 Leichlingen (DE)**
- **Kirsch, Jürgen, Dr.**
  **D-51375 Leverkusen (DE)**
- **Dhein, Rolf, Dr.**
  **D-47800 Krefeld (DE)**

(56) Entgegenhaltungen:
**EP-A- 0 097 828** **DE-A- 3 829 744**
**FR-A- 2 350 370**

- **DATABASE WPI Week 8731, Derwent Publications Ltd., London, GB; AN 87-216271 & JP-A-62 141 023 (IDEMITSU KOSAN KK) 24. Juni 1987**
- **: "Encyclopedia of Polymer Science and Engineering" , , J WYLEY & SONS, NEW YORK**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 683 193 B1

## Beschreibung

Gegenstand der vorliegenden Erfindung ist die Verwendung von tertiären, aliphatischen Monocarbonsäuren mit 9 bis 16 C-Atomen und bevorzugt von solchen mit 9 bis 13 C-Atomen als Kettenabbrecher zur Herstellung von thermoplastischen, aromatischen Polycarbonaten.

Die erfindungsgemäß erhältlichen aromatischen Polycarbonate haben insbesondere eine verbesserte Wärmeformbeständigkeit gegenüber vergleichbaren Polycarbonaten, die lineare, aliphatische Monocarbonsäuren als Kettenabbrecher eingebaut enthalten, beispielsweise gegenüber denen der JA-34992/76 und der DE-OS 2 620 256 (Le A 16 686).

EP-A 0 097 828 beschreibt die Verwendung verzweigter Carbonsäuren als Kettenabbrecher für Polycarbonate. Die dort verwendeten Carbonsäuren mit mehr als 7 Kohlenstoffatomen ergeben jedoch Glastemperaturen des resultierenden Bisphenol-A-Polycarbonats von unter 150 °C, während niedrigere verzweigte Säuren nur mit Hilfe des Säurechlorids zuverlässig als Endgruppe einbaubar sind.

Gegenstand der vorliegenden Erfindung sind somit auch thermoplastische, aromatische Polycarbonate mit tertiären, aliphatischen Monocarboxylendgruppen mit 9 bis 16 C-Atomen und bevorzugt mit solchen mit 9 bis 13 C-Atomen.

Die Herstellung der erfindungsgemäßen thermoplastischen, aromatischen Polycarbonate unter Verwendung der tertiären Monocarbonsäuren erfolgt vorzugsweise nach dem Zweiphasengrenzflächenverfahren, ohne daß die Monocarbonsäuren vorab in die Monocarbonsäurehalogenide überführt werden müssen.

Dies gelingt unseres Wissens bislang nur mit Monocarbonsäuren mit $\overline{M}n$ (Zahlenmittelmolekulargewicht) von größer 600 gemäß DE-OS 2 636 783 (Le A 16 689) und DE-OS 2 702 626 (Le A 17 356), oder bei Verwendung des Pyridinverfahrens (JA-34992/76, Beispiel 8) oder bei gleichzeitiger Mitverwendung von Monophenol-Kettenabbrecher (DE-OS 2 620 256, Beispiel 4).

Aus der DE-OS 3 618 378 (Le A 24 330) sind Poly-($C_2$-$C_{10}$-$\alpha$-olefin)-carbonsäuren mit $\overline{M}w$ von 2000 bis 350.000 bekannt, die eine COOH-Funktionalität von 0,5 bis 2,0 pro Molekül haben (Seite 5, Zeilen 7-13 der DE-OS). Diese Carbonsäuren werden nach Überführung in die entsprechenden Säurehalogenide zur Herstellung von Polyolefin-Polycarbonat-Blockcopolymeren verwendet (Seite 3, Zeilen 7-10 der DE-OS). Also auch hier keine unmittelbare Anknüpfung der Carbonsäure an das Polycarbonatmolekül.

Gegenstand der vorliegenden Erfindung ist somit auch ein Verfahren zur Herstellung der erfindungsgemäßen Polycarbonate mit verzweigten, aromatischen Monocarboxylendgruppen aus Diphenolen, Kettenabbrechern, Phosgen und gegebenenfalls Verzweigern nach der Methode des Zweiphasengrenzflächenverfahrens, das dadurch gekennzeichnet ist, daß als Kettenabbrecher tertiäre, aliphatische Monocarbonsäuren mit 9 bis 16 C-Atomen und bevorzugt solche mit 9 bis 13 C-Atomen in Mengen von 0,6 Mol-% bis 10 Mol-%, vorzugsweise von 2 Mol-% bis 7 Mol-%, bezogen auf Mole Diphenole, eingesetzt werden.

Gegenstand der vorliegenden Erfindung sind außerdem die nach dem erfindungsgemäßen Verfahren erhältlichen thermoplastischen, aromatischen Polycarbonate.

Die erfindungsgemäß erhältlichen thermoplastischen, aromatischen Polycarbonate haben Gewichtsmittelmolekulargewichte $\overline{M}w$ (ermittelt durch Gelchromatographie in bekannter Weise) von 5.000 bis 200.000, vorzugsweise von 10.000 bis 40.000.

Tertiäre aliphatische Monocarbonsäuren sind erfindungsgemäß Gemische verschiedener Monocarbonsäuren, deren Hauptbestandteil jeweils der Formel (I) entspricht

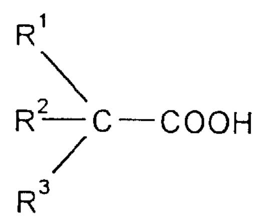

(I),

worin $R^1$, $R^2$ und $R^3$ jeweils unabhängig voneinander $C_1$-$C_{12}$-Alkylreste, vorzugsweise $C_1$-$C_9$-Alkylreste darstellen, wobei die Zahl der C-Atome insgesamt 9 bis 16, vorzugsweise 9 bis 13 ist.

In untergeordneter Menge, jeweils bis maximal 20 Gew.-%, bezogen jeweils auf Gesamtgewicht, können auch Säuren vorhanden sein, bei denen $R^1$ auch Wasserstoff ist. Die Reste $R^1$, $R^2$ und $R^3$ können linear oder verzweigt sein, vorzugsweise sind sie verzweigt.

Tertiäre aliphatische Monocarbonsäuren sind beispielsweise solche, die durch Kochsynthese, also durch Einwirkung von CO in Gegenwart von starken Protonensäuren wie $H_2SO_4$, auf Olefine, vorzugsweise oligomerisiertes Propen oder oligomerisierte Butene, besonders Isobuten, erhalten werden.

Derartige Säuren mit tertiären COOH-Gruppen sind als Versatic®-Säuren von der Firma Shell im Handel erhältlich (siehe beispielsweise Römpps Chemie Lexikon, 8. Auflage, Franckh'sche Verlagshandlung, Stuttgart, Band 6, T-Z, 1988, Seiten 4501 und 4502).

Diese Säuren sind als schwer veresterbar bekannt (siehe Römpps Chemie Lexikon, loc. cit.), so daß von ihnen nicht zu erwarten war, daß sie unmittelbar, ohne Überführung in die entsprechenden Säurehalogenide unter den Bedingungen des Phasengrenzflächenverfahrens reagieren.

Die Alkalisalze der Versatic-Säuren, also die Alkaliversatate sind im Gegensatz zu Alkalisalzen höherer linearer Carbonsäuren, wie etwa der Stearinsäure, leicht in Wasser löslich, so daß ein Übergang in die organische Phase, der zum Einbau in das Polycarbonat notwendig ist, unwahrscheinlich erschien. Dennoch ist die Einbaurate verglichen mit unverzweigten, primären Carbonsäuren verbessert.

Besonders bevorzugte, erfindungsgemäß geeignete Monocarbonsäuren sind Versatic®-9 und Versatic®-10.

Bevorzugte Ausgangsstoffe zur Herstellung der erfindungsgemäß geeigneten Versatic®-Säuren sind di- oder trimerisiertes Isobuten oder tri- oder tetramerisiertes Propen.

Für die Herstellung der erfindungsgemäßen Polycarbonate geeignete Diphenole der Formel (II)

$$HO\text{-}Z\text{-}OH \qquad (II)$$

mit vorzugsweise 6 bis 30 C-Atomen sind sowohl einkernige, als auch mehrkernige Diphenole, die Heteroatome enthalten können und unter den Bedingungen der Polycarbonatherstellung und deren thermischer Behandlung inerte Substituenten haben können.

Beispielsweise seien Hydrochinon, Resorcin, Dihydroxydiphenyl, Bis-(hydroxyphenyl)-alkane, Bis-(hydroxyphenyl)-cycloalkane, Bis-(hydroxyphenyl)-sulfide, -ether, -ketone, -sulfoxide, -sulfone und α,α-Bis-(hydroxyphenyl)-diisopropylbenzole sowie deren kernalkylierte und kernhalogenierte Verbindungen genannt.

Geeignete Diphenole sind beispielsweise in den US-Patenten 3 028 365, 2 999 835, 3 062 781, 3 148 172 und 4 982 014, in den deutschen Offenlegungsschriften 1 570 703 und 2 063 050 sowie in der Monographie "H. Schnell, Chemistry and Physics of Polycarbonates, Interscience Publishers, New York, 1964" beschrieben.

Bevorzugte Diphenole sind

4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
α,α-Bis-(4-hydroxyphenyl)-p-diisopropylbenzol,
2,2-Bis-(3 methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α',-Bis-(3,5-dimethyl-4-hydroxyphenyl)-p-diisopropyl-benzol,
1,1-Bis-(4-hydroxyphenyl)-3,3,5-trimethylcyclohexan,
1,1-Bis-(4-hydroxyphenyl)-3-methylcyclohexan,
1,1-Bis-(4-hydroxyphenyl)-3,3-dimethylcyclohexan,
1,1-Bis-(4-hydroxyphenyl)-4-methyl-cyclohexan,
2,2-Bis-(3,5-dichlor-4-hydroxyphenyl)-propan und
2,2-Bis-(3,5-dibrom-4-hydroxyphenyl)-propan.

Besonders bevorzugte Diphenole sind z.B.:

2,2-Bis-(4-hydroxyphenyl)-propan,
2,2,-Bis(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-cyclohexan.

1,1-Bis-(4-hydroxyphenyl)-3,3,5-trimethylcyclohexan,
1,1-Bis-(4-hydroxyphenyl)-3-methylcyclohexan,
1,1-Bis-(3,5-dimethyl-4-hydroxyphenyl)-4-methylcyclohexan.

Insbesondere ist 2,2-Bis-(4-hydroxyphenyl)-propan und 1,1-Bis-(4-hydroxyphenyl)-3,3,5-trimethylcyclohexan bevorzugt.

Es können auch beliebige Mischungen der vorgenannten Diphenole verwendet werden.

Zwecks Verbesserung des Fließverhaltens können auch geringe Mengen, vorzugsweise Mengen zwischen 0,05 und 2,0 Mol-% (bezogen auf Mole an eingesetzten Diphenolen), an tri- oder mehr als trifunktionellen Verbindungen, insbesondere solchen mit drei oder mehr als drei phenolischen Hydroxylgruppen in bekannter Weise mitverwendet werden. Einige der verwendbaren Verbindungen mit drei oder mehr als drei phenolischen Hydroxylgruppen sind beispielsweise 1,3,5-Tri-(4-hydroxyphenyl)-benzol, 1,1,1-Tri-(4-hydroxyphenyl)-ethan, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenylisopropyl)-phenyl)-ortho-terephthalsäureester, Tetra-(4-hydroxyphenyl)-methan und 1,4-Bis-(4',4"-dihydroxytriphenyl)methyl)-benzol. Einige der sonstigen dreifunktionellen Verbindungen sind 2,4-Dihydroxybenzoesäure, Trimesinsäure, Cyanurchlorid und 3,3-Bis-(4-hydroxy-3-methyl-phenyl)-2-oxo-2,3-dihydroindol.

Die erfindungsgemäße Herstellung der erfindungsgemäßen Polycarbonate kann wie folgt durchgeführt werden:

Vorab werden die einzusetzenden Diphenole in wäßriger alkalischer Phase gelöst. Dazu werden die zur Herstellung der erfindungsgemäßen Polycarbonate erforderlichen Kettenabbrecher in Mengen von 0,6 bis 10 Mol-%, bezogen auf Mole Diphenol, in einem organischen Lösungsmittel gelöst oder in Substanz, zugegeben. Dann wird in Gegenwart einer inerten, vorzugsweise Polycarbonat-lösenden, organischen Phase mit Phosgen umgesetzt. Die Reaktionstemperatur liegt zwischen 0°C und 40°C.

Die Zugabe der erforderlichen Kettenabbrecher in Art und Menge wie oben angegeben, kann auch während der Phosgenierung erfolgen.

Geeignete organische Lösungsmittel für die Kettenabbrecher sind beispielsweise Methylenchlorid, Chlorbenzol, Mischungen aus Methylenchlorid und Chlorbenzol, Aceton, Acetonitril, Toluol.

Geeignete organische Lösungsmittel für die Polycarbonate sind $CH_2Cl_2$, Chlorbenzol oder Mischungen aus $CH_2Cl_2$ und Chlorbenzol.

Die Reaktion kann durch Katalysatoren wie Tributylamin oder Triethylamin begünstigt werden. Um den Einbau des Kettenabbrechers zu begünstigen, können auch Oniumsalze, wie etwa Tetraalkylammoniumhalogenide als Phasentransferkatalysatoren mitverwendet werden.

Werden Verzweiger mitverwendet, so kann deren Zugabe vor der Umsetzung mit Phosgen oder während der Phosgenierung erfolgen.

Neben oder anstelle der Diphenole können auch deren Chlorkohlensäureester eingesetzt werden.

Die Isolierung der erfindungsgemäßen Polycarbonate erfolgt in bekannter Weise. Geeignete Aufarbeitungsverfahren sind insbesondere das Ausfällen, die Sprühtrocknung und das Verdampfen des Lösungsmittels im Vakuum.

Die erfindungsgemäß bevorzugten Polycarbonate sind im Falle der Bisphenol-A-Polycarbonate im wesentlichen frei von Oligomeren mit einer Molmasse $\leq$ 508 g/mol (Versatic-9 - als Kettenabbrecher), wobei als theoretisch kleinstes Oligomer der Diester von Bisphenol-A mit zwei Versatic-Säuren angenommen wird, während beispielsweise Phenol-terminierte Polycarbonate als kleinstes Oligomer Diphenylcarbonat mit einer Molmasse von 214 g/mol enthalten können.

Die erfindungsgemäß bevorzugten Polycarbonate sind bei der Herstellung nach dem Phasengrenzflächenverfahren frei von Kettenabbrecher, da, wie erwähnt, Versatic-Säuren gut in alkalischen, wäßrigen Medien löslich sind und daher vollständig aus der organischen Polycarbonatphase ausgeschüttelt werden.

Die erfindungsgemäßen Polycarbonate haben, wie eingangs bereits angesprochen, insbesondere eine erhöhte Glastemperatur, was auch eine verbesserte Wärmeformbeständigkeit bedeutet, verglichen mit Polycarbonaten, die mit linearen Monocarbonsäuren als Kettenabbrecher hergestellt wurden, aber auch verglichen mit solchen, die mit Monophenolen als Kettenabbrecher hergestellt werden.

Den erfindungsgemäßen Polycarbonaten können noch vor oder nach ihrer Verarbeitung die für thermoplastische Polycarbonate üblichen Additive wie Stabilisatoren, Entformungsmittel, Pigmente, Flammschutzmittel, Antistatika, Füllstoffe und Verstärkungsstoffe in den üblichen Mengen zugesetzt werden.

Die erfindungsgemäßen Polycarbonate können zu Formkörpern verarbeitet werden, indem man beispielsweise die in bekannter Weise isolierten Polycarbonate zu Granulat extrudiert und dieses Granulat gegebenenfalls nach Zusatz der obengenannten Additive durch Spritzguß zu verschiedenen Artikeln in bekannter Weise verarbeitet.

Die erfindungsgemäßen Polycarbonate sind als Formkörper überall dort einsetzbar, wo die bislang bekannten Polycarbonate eingesetzt wurden, also beispielsweise im Elektrosektor sowie im Bausektor, und zwar dann, wenn erhöhte Wärmeformbeständigkeit verlangt wird.

Beispiele für Verwendung sind Folien, Verbundfolien, Extrusions- und Spritzgußformteile mit und ohne Füllstoffe bzw. Glasfaserverstärkung wie z.B. Sicherheitshelme, Schaumstoffe, Plattenware und Blaskörper, sowie medizinische Artikel, wie Schläuche und Kurzzeitimplantate.

Das erfindungsgemäße Verfahren zur Herstellung der aromatischen Polycarbonate mit den tertiären, aliphatischen Monocarboxylendgruppen läßt sich auch auf die Herstellung von aromatischen Polyestercarbonaten ausdehnen, indem ein Teil der Carbonatspender durch reaktive aromatische Dicarbonsäurederivate, vorzugsweise durch aromatische Dicarbonsäuredichloride ersetzt wird.

Gegenstand der vorliegenden Erfindung ist somit auch die Verwendung von tertiären aliphatischen Monocarbonsäuren mit 9 bis 16 C-Atomen und besonders bevorzugt von solchen mit 9 bis 13 C-Atomen als Kettenabbrecher für die Herstellung von thermoplastischen, aromatischen Polyestercarbonaten.

Gegenstand der vorliegenden Erfindung ist somit auch ein Verfahren zur Herstellung von thermoplastischen, aromatischen Polyestercarbonaten aus Diphenolen, Kettenabbrechern, Phosgen, reaktiven aromatischen Dicarbonsäurederivaten und gegebenenfalls Verzweigern nach der Methode des Phasengrenzflächenverfahrens, das dadurch gekennzeichnet ist, daß man als Kettenabbrecher tertiäre aliphatische Monocarbonsäuren mit 9 bis 16 C-Atomen und bevorzugt solche mit 9 bis 13 C-Atomen in Mengen von 0,6 bis 10 Mol-%, vorzugsweise 2 bis 7 Mol-%, bezogen auf Mole an eingesetzten Diphenolen, einsetzt.

Reaktive aromatische Dicarbonsäurederivate sind solche, die unter den Bedingungen des Phasengrenzflächenverfahrens bifunktionell reagieren. Bevorzugt sind, wie bereits erwähnt, die Di-säuredichloride.

Bevorzugte aromatische Dicarbonsäuren sind Isophthalsäure und Terephthalsäure und deren Gemische, deren bevorzugte Derivate die Dichloride und die Dimethylester.

Bezüglich der einzusetzenden Diphenole Verzweiger, der einzuhaltenden Reaktionsbedingungen gelten die bereits für die Herstellung der erfindungsgemäßen Polycarbonate gemachten Ausführungen.

Das Verhältnis von Phosgen zu reaktivem aromatischem Dicarbonsäurederivat kann in weiten Grenzen variieren, wobei vorzugsweise bis zu 40 Mol-%, bezogen auf die Molsumme aus Phosgen + Dicarbonsäurederivat, durch die reaktiven aromatischen Dicarbonsäurederivate ersetzt werden können, je nachdem, wie sehr die erfindungsgemäßen Polycarbonate zu noch höherer Wärmeformbeständigkeit hin modifiziert werden sollen.

Gegenstand der vorliegenden Erfindung sind somit außerdem die nach dem erfindungsgemäßen Verfahren erhältlichen aromatischen Polyestercarbonate mit mittleren Molekulargewichten $\overline{M}w$ (Gewichtsmittel, ermittelt durch Gelchromatographie) von 5.000 bis 200.000, vorzugsweise von 10.000 bis 40.000.

Gegenstand der vorliegenden Erfindung sind außerdem thermoplastische, aromatische gegebenenfalls verzweigte Polyestercarbonate mit Gewichtsmittelmolekulargewichten $\overline{M}w$ (ermittelt wie vorstehend) von 5.000 bis 200.000, vorzugsweise von 10.000 bis 40.000 mit tertiären, aliphatischen Monocarboxylendgruppen mit 9 bis 16 C-Atomen und bevorzugt mit solchen mit 9 bis 13 C-Atomen.

Die erfindungsgemäßen Polyestercarbonate haben ein Eigenschaftsbild, das sich durch hohe Zähigkeit bei tiefen Temperaturen verbunden mit einer verbesserten Wärmeformbeständigkeit auszeichnet.

Bezüglich Isolierung, Additivzusatz und thermoplastische Verarbeitung gelten die vorstehend für die erfindungsgemäßen Polycarbonate gemachten Ausführungen.

Der technische Einsatz der erfindungsgemäßen Polyestercarbonate erfolgt beispielsweise in der Optik und auf dem Elektrosektor.

**Beispiel 1**

In einem 1 l-4-Halskolben werden 22,8 g 2,2-Bis-(4-hydroxyphenyl)-propan, 0,52 g Versatic®-10 (3 Mol-%), 11 g 45%ige NaOH und 270 ml Dichlormethan vorgelegt. Man leitet bei Raumtemperatur (20°C) 16 g Phosgen ein, gibt 0,11 ml Ethylpiperidin zu und läßt 45 Min nachrühren. Es wird mit verdünnter HCl angesäuert und ionenfrei gewaschen. Nach Trocknen und Einengen erhält man 25,1 g Produkt mit einer relativen Lösungsviskosität von 1,28 (0,5 % in Methylenchlorid). Die Glastemperatur (gemessen durch DSC) beträgt 153°C. Ein 3,2 mm dicker Stab zeigt im Kerbschlagversuch noch bei -20°C Zähbruch, ein 4 mm dicker Stab zeigt bei Raumtemperatur durchgehend Zähbruch.

**Vergleichsbeispiel 1**

Ein mit Phenol abgebrochenes Polycarbonat gleicher Lösungsviskosität hat eine Glastemperatur (gemessen durch DSC) von 149°C. Ein 3,2 mm dicker Stab des phenolterminierten Polycarbonats zeigt im Kerbschlagversuch schon bei 0 bis -10°C Sprödbruch, ein 4 mm dicker Stab zeigt auch schon bei Raumtemperatur vereinzelt Sprödbruch.

**Vergleichsbeispiel 2**

Man verfährt wie in Beispiel 1, wobei anstelle von 3 Mol-% Versatic®-10-säure 3 Mol-% n-Decansäure als Kettenabbrecher eingesetzt werden. Man erhält 25,1 g Polycarbonat einer relativen Lösungsviskosität von 1,30. Die Glastemperatur (gemessen durch DSC) beträgt 145°C. Der Einbau ist schlechter als in Beispiel 1, da die Lösungsviskosität größer als 1,28 ist.

**Vergleichsbeispiel 3**

Man verfährt wie in Beispiel 1 beschrieben, wobei statt 3 Mol-% Versatic®-10 4 Mol-% Stearoylchlorid als Kettenabbrecher eingesetzt werden. Man erhält 25,2 g Produkt einer relativen Lösungsviskosität von 1,31. Da eine molar größere Menge an Kettenabbrecher eingesetzt wurde, hätte man eine niedriegere Viskosität als 1,28 erwartet. Der Vergleichsversuch zeigt das Stearinsäure selbst in Form seines reaktiven Chlorids und trotz der größeren Lipophilie nicht so effizient als Kettenabbrecher wirkt wie Versatic®-10.

## Patentansprüche

1. Verwendung von tertiären, aliphatischen Monocarbonsäuren mit 9 bis 16 C-Atomen als Kettenabbrecher zur Herstellung von thermoplastischen, aromatischen Polycarbonaten.

2. Thermoplastische, aromatische Polycarbonate mit tertiären, aliphatischen Monocarboxylendgruppen, dadurch gekennzeichnet, daß die tertiären aliphatischen Monocarboxylendgruppen 9 bis 16 C-Atome enthalten.

3. Verfahren zur Herstellung der Polycarbonate des Anspruchs 2 aus Diphenolen, Kettenabbrechern, Phosgen und gegebenenfalls Verzweigern nach der Methode des Zweiphasengrenzflächenverfahrens, dadurch gekennzeichnet, daß als Kettenabbrecher tertiäre, aliphatische Monocarbonsäuren mit 9 bis 16 C-Atomen in Mengen von 0,6 bis 10 Mol-%, bezogen auf Mole Diphenole, eingesetzt werden.

4. Verwendung von tertiären, aliphatischen Monocarbonsäuren mit 9 bis 16 C-Atomen als Kettenabbrecher zur Herstellung von thermoplastischen, aromatischen Polyestercarbonaten.

5. Verfahren zur Herstellung von thermoplastischen, aromatischen Polyestercarbonaten aus Diphenolen, Kettenabbrechern, Phosgen, reaktiven aromatischen Dicarbonsäurederivaten und gegebenenfalls Verzweigern nach der Methode des Phasengrenzflächenverfahrens, dadurch gekennzeichnet,

daß man als Kettenabbrecher tertiären, aliphatische Monocarbonsäuren mit 9 bis 16 C-Atomen in Mengen von 0,6 bis 10 Mol-%, bezogen auf Mole an eingesetzten Diphenolen, einsetzt.

**6.** Thermoplastische, aromatische, gegebenenfalls verzweigte Polyestercarbonate mit mittleren Molekulargewichten Mw (ermittelt durch Gelchromatographie) von 5.000 bis 200.000 mit tertiären, aliphatischen Monocarboxylendgruppen, dadurch gekennzeichnet, daß die tertiären, aliphatischen Monocarboxylendgruppen 9 bis 16 C-Atome enthalten.

**7.** Verwendung von tertiären aliphatischen Monocarbonsäuren, erhältlich durch Kochreaktion von dimerisiertem Isobuten, trimerisiertem Isobuten, trimerisiertem Propen oder tetramerisiertem Propen, als Kettenabbrecher zur Herstellung von thermoplastischen, aromatischen Polycarbonaten oder von thermoplastischen, aromatischen Polyestercarbonaten.

**Claims**

**1.** Use of tertiary, aliphatic monocarboxylic acids having 9 to 16 C atoms as chain terminators for the production of thermoplastic, aromatic polycarbonates.

**2.** Thermoplastic, aromatic polycarbonates having tertiary, aliphatic monocarboxyl terminal groups, characterised in that the tertiary aliphatic monocarboxyl terminal groups contain 9 to 16 C atoms.

**3.** Process for the production of the polycarbonates of claim 2 from diphenols, chain terminators, phosgene and optionally branching agents using the two phase interface process, characterised in that tertiary, aliphatic monocarboxylic acids having 9 to 16 C atoms are used as the chain terminators in quantities of 0.6 to 10 mol.%, relative to moles of diphenols.

**4.** Use of tertiary, aliphatic monocarboxylic acids having 9 to 16 C atoms as chain terminators for the production of thermoplastic, aromatic polyester carbonates.

**5.** Process for the production of thermoplastic, aromatic polyester carbonates from diphenols, chain terminators, phosgene, reactive aromatic dicarboxylic acid derivatives and optionally branching agents using the phase interface process, characterised in that tertiary, aliphatic monocarboxylic acids having 9 to 16 C atoms are used as the chain terminators in quantities of 0.6 to 10 mol.%, relative to moles of diphenols used.

**6.** Thermoplastic, aromatic, optionally branched polyester carbonates with average molecular weights $\overline{M}_w$ (determined by gel chromatography) of 5000 to 200000 having tertiary, aliphatic monocarboxyl terminal groups, characterised in that the tertiary aliphatic monocarboxyl terminal groups contain 9 to 16 C atoms.

**7.** Use of tertiary aliphatic monocarboxylic acids, obtainable by a Koch reaction of dimerised isobutene, trimerised isobutene, trimerised propene or tetramerised propene, as chain terminators for the production of thermoplastic, aromatic polycarbonates or of thermoplastic, aromatic polyester carbonates.

**Revendications**

**1.** Utilisation d'acides monocarboxyliques aliphatiques tertiaires contenant de 9 à 16 atomes de carbone à titre d'agents de rupture de chaînes pour la préparation de polycarbonates aromatiques thermoplastiques.

**2.** Polycarbonates aromatiques thermoplastiques contenant des groupes terminaux monocarboxyliques aliphatiques tertiaires, caractérisés en ce que les groupes terminaux monocarboxyliques aliphatiques tertiaires contiennent de 9 à 16 atomes de carbone.

**3.** Procédé pour la préparation des polycarbonates selon la revendication 2, à partir de diphénols, d'agents de rupture de chaînes, de phosgène et le cas échéant d'agents de ramification conformément au procédé interfacial biphasique, caractérisé en ce qu'on met en oeuvre, à titre d'agents de rupture de chaînes, des acides monocarboxyliques aliphatiques tertiaires contenant de 9 à 16 atomes de carbone dans des quantités de 0,6 à 10 moles % rapportés aux moles des diphénols.

**4.** Utilisation d'acides monocarboxyliques aliphatiques tertiaires contenant de 9 à 16 atomes de carbone à titre d'agents de rupture de chaînes pour la préparation de polyester-carbonates aromatiques thermoplastiques.

**5.** Procédé pour la préparation de polyester-carbonates aromatiques thermoplastiques à partir de diphénols, d'agents de rupture de chaînes, de phosgène, de dérivés réactifs d'acides dicarboxyliques aromatiques et, le cas échéant, d'agents de ramification conformément au procédé interfacial biphasique, caractérisé en ce qu'on met en oeuvre, à titre d'agents de rupture de chaînes, des acides monocarboxyliques aliphatiques tertiaires contenant de 9 à 16 atomes de carbone dans des quantités de

0,6 à 10 moles % rapportés aux moles des diphénols mis en oeuvre.

**6.** Polyester-carbonates aromatiques thermoplastiques le cas échéant ramifiés possédant des poids moléculaires moyens Mw (déterminés par chromatographie par perméation du gel) de 5.000 à 200.000, contenant des groupes terminaux monocarboxyliques aliphatiques tertiaires, caractérisés en ce que les groupes terminaux monocarboxyliques aliphatiques tertiaires contiennent de 9 à 16 atomes de carbone.

**7.** Utilisation d'acides monocarboxyliques aliphatiques tertiaires que l'on obtient par réaction de Koch d'isobutène dimérisé, d'isobutène trimérisé, de propène trimérisé et de propène tétramérisé, à titre d'agents de rupture de chaînes pour la préparation de polycarbonates aromatiques thermoplastiques ou de polyester-carbonates aromatiques thermoplastiques.